# EUROPEAN PATENT SPECIFICATION

(11) **EP 4 069 410 B1**
(45) Date of publication and mention of the grant of the patent: **06.03.2024**
(21) Application number: 20815810.5
(22) Date of filing: 01.12.2020
(51) Int. Cl.: B01J 4/00, B01J 3/02, B01J 19/00

(54) **HIGH-PRESSURE POLYMERIZATION SYSTEM AND HIGH-PRESSURE POLYMERIZATION PROCESS FOR THE POLYMERIZATION OF ETHYLENICALLY UNSATURATED MONOMERS**
HOCHDRUCKPOLYMERISATIONSSYSTEM UND HOCHDRUCKPOLYMERISATIONSVERFAHREN ZUR POLYMERISATION VON ETHYLENISCH UNGESÄTTIGTEN MONOMEREN
SYSTÈME DE POLYMÉRISATION HAUTE PRESSION ET PROCÉDÉ DE POLYMÉRISATION À HAUTE PRESSION POUR LA POLYMÉRISATION DE MONOMÈRES ÉTHYLÉNIQUEMENT INSATURÉS

(30) Priority: 03.12.2019 EP 19213344
(43) Date of publication of application: 12.10.2022
(73) Proprietor: Basell Polyolefine GmbH, 50389 Wesseling (DE)
(72) Inventor: WOLF, Christoph, 50259 Pulheim-Dansweiler (DE); MOHRBUTTER, Juergen, 53347 Alfter (DE); FINETTE, Andre-Armand, 50997 Köln (DE); DEUERLING, Michael, 53919 Weilerswist (DE); KHAYRULLIN, Danir, 50321 Bruehl (DE); LITTMANN, Dieter, 35325 Mücke (DE)
(74) Representative: LyondellBasell
(86) International application number: PCT/EP2020/084032
(87) International publication number: WO 2021/110633

(56) References cited:
- EP-A2- 0 266 543
- US-A1- 2010 056 707
- US-A1- 2019 112 536
- US-B2- 9 115 667

## Description

### FIELD OF THE INVENTION

The present disclosure relates to a high-pressure polymerization system for the polymerization of ethylenically unsaturated monomers and to a high-pressure polymerization process for the polymerization of ethylenically unsaturated monomers to obtain an ethylene-based polymer in a high-pressure polymerization system comprising a continuously operated polymerization reactor.

### BACKGROUND OF THE INVENTION

Polyethylene is the most widely used commercial polymer. It can be prepared by a couple of different processes. Polymerization in the presence of free-radical initiators at elevated pressures was the method first discovered to obtain polyethylene and continues to be a valued process with high commercial relevance for the preparation of low density polyethylene (LDPE).

A common set-up of a plant for preparing low density polyethylene comprises, besides a polymerization reactor which can be an autoclave or a tubular reactor or a combination of such reactors, further equipment. For pressurizing the reaction components usually a set of two compressors, a primary compressor and a secondary compressor, which is sometimes designated as hyper compressor, is used. At the end of the polymerization sequence, a high-pressure polymerization unit normally further includes apparatuses like extruders and granulators for pelletizing the obtained polymer. Furthermore, such a polymerization unit generally also comprises systems for feeding monomers and comonomers, free-radical initiators, modifiers or other substances at one or more positions to the polymerization reaction. Plants for preparing polyethylene are regularly constructed in a manner to be run continuously for long periods of time without any signs of fatigue, thus, in general allowing rather long maintenance intervals.

The polymerization process in a LDPE reactor is carried out at high pressures which can reach 350 MPa. Such high pressure requires special technology for the process to be handled in a safe and reliable manner. It is known that under certain temperature and pressure conditions ethylene can decompose rapidly in an explosive manner to give soot, methane and hydrogen. Associated therewith is a drastic increase in pressure and temperature. The decomposition temperatures can be excessively high (>1 000°C) which presents a considerable potential risk for the operational safety of the production plants. For example, the temperatures reached during such a decomposition event can damage the reactor tubes, e.g. it may cause the tube metal to austenize. At temperatures at which the metal austenizes, martensite is being formed in the reactor tubes, if the material is cooled rapidly. Martensite is the hardest and most brittle of the various microstructures found in carbon steels.

Therefore, rapid removal of the hot gas produced by decomposition and rapid reduction of the pressure is believed to be essential during emergency blowdown.

According to WO 2017/098389 A1, such rapid removal of hot gas shall be accomplished by a unidirectional blow down system comprising a front emergency blowdown valve located downstream from a hyper compressor discharge and in the front end of the reactor, and at least one additional valve at the end of the reactor. Here, the system shall prevent the reactor walls from reaching a temperature capable of causing the tube metal to austenize by maintaining flow in a single direction away from the hyper compressor during the blowdown process, and by maintaining specific pressure and flow velocity within the reactor during blowdown. In this manner the amount of heat transfer to the tube reactor shall be minimized.

Another problem is leakage of monomer mixtures which can occur with reaction plants which are run under high pressure and at high temperatures such as polyethylene formation. Also in such instances, i.e. after detection of a leakage of monomers or reaction mixture, the polymerization process is usually interrupted and the polymerization plant is depressurized. The detection of leakages can, for example, be accomplished by IR point detectors as disclosed in WO 2017/194491 A1.

Within conventional polyethylene plants such as LDPE plants, depressurization systems make use of a so-called blow down vessel, which is located inside a so-called reactor bay. Regularly, in case of an emergency, the shutdown requires to depressurize both the secondary compressor and the reactor. EP 0 272 512 A2 discloses that it is also possible to divide the high pressure polymerization system into a plurality of isolated sections at the same time as shutdown is triggered and only the section in which the shutdown is triggered is depressurized. The reactor content comprising both hot ethylene and hot polymer is disposed into the reactor blow down vessel via one or more emergency expansion valves in order to quench the hot gases with water and to separate the waste polymer from ethylene. The latter is usually sent to atmosphere at safe location and the polymer is retained inside the blow down vessel. EP 0 266 543 A2 discloses that the depressurized reaction mixture is passed through at least two separating tanks installed in series, before reaching the atmosphere. However, due to the high pressure with which hot ethylene and hot polymer are introduced into the reactor blow down vessel it is still possible that not only the reaction gas and steam are released via a vent stack into the atmosphere, but polymeric particles are often also carried along this route. This reduces the amount of polymeric material which can be recovered. And, in some cases, the gas flow escaping through the vent stack of the reactor blow down vessel may generate a rather loud, annoying noise.

Therefore, a continuing need exists to provide improved ethylene polymerization processes in a high-pressure polymerization system, which in case of a shutdown due to disturbances of the polymerization process such as temperature and/or pressure increase above safety thresholds allow a quicker and safer quenching of hot gas which flows into the reactor blow down vessel and a quicker and more extensive separation of polymers and gases while simultaneously allowing for a reduced noise level in connection with releasing the gas which enters the reactor blow down vessel.

### SUMMARY OF THE INVENTION

The present disclosure provides a high-pressure polymerization system comprising
a) a continuously operable polymerization reactor having a reactor inlet and having a reactor outlet and
b) a reactor blow down system adapted and arranged to be in fluid communication with the polymerization reactor, the reactor blow down system comprising
   b1) a reactor blow down vessel, which has an essentially circular design over a major portion P having a length L, a diameter D and a L/D-ratio in the range from 1.75 to 10.0 which contains an aqueous quenching medium,
   b2) one or more release lines, which connect the polymerization reactor with the reactor blow down vessel and which comprise a release line outlet for expanding a content of the high-pressure polymerization system comprising polymer and gaseous components into the reactor blow down vessel, where the release line outlets are located above a maximum level for the aqueous quenching medium, and
   b3) one or more first emergency valves arranged in the one or more release lines and adapted to open and close a fluid communication between the polymerization reactor and the reactor blow down system,

wherein the release line outlets each have a joining piece, which has a central axis and which is arranged in a way that an angle (α) formed between the central axis of the joining piece and a tangent being located at the intersection of the central axis with the circular periphery of the major portion P of the reactor blow down vessel and having the same inclination as the central axis with respect to the horizontal plane containing this intersection is in the range from 5° to 70°,
wherein the reactor blow down vessel further comprises a vent stack for venting the gaseous components to the atmosphere, the vent stack containing a constricted section, wherein the vent stack is a vertical tube having an inner diameter from 0.4 m to 1.4 m and the constricted section of the vent stack has a smaller inner diameter so that the open cross-sectional area at the constricted section is from 10% to 60% of the open cross-sectional area of the vertical tube.

In some embodiments, the joining pieces are arranged essentially tangentially with regard to the horizontal circumference of said major portion P.

In some embodiments, the joining pieces are inclined downwards such that the stream of the content of the high-pressure polymerization system comprising polymer and gaseous components is directed towards a surface of the aqueous quenching medium in the reactor blow down vessel.

In some embodiments, an angle of inclination (β) between the central axis of the joining pieces and horizontal planes passing through the major portion P of the reactor blow down vessel at the positions where the central axis crosses the horizontal circumference of the major portion P is in the range from 3° to 89°.

In some embodiments, a multitude of release lines connects the polymerization reactor with the reactor blow down vessel.

In some embodiments, a multitude of the joining pieces of the release line outlets of the release lines connecting the polymerization reactor with the reactor blow down vessel are located on the same horizontal level of the major portion P of the reactor blow down vessel, and/or
wherein a multitude of the joining pieces of the release line outlets of the release lines connecting the polymerization reactor with the reactor blow down vessel are equidistantly or evenly distributed over the circumference of the major portion P of the reactor blow down vessel.

In some embodiments, a first set of joining pieces of release line outlets of the release lines connecting the polymerization reactor with the reactor blow down vessel is located on the same horizontal level of the major portion P of the reactor blow down vessel, wherein
at least one second set of joining pieces of release line outlets of the release lines connecting the polymerization reactor with the reactor blow down vessel is aligned horizontally on the major portion P of the reactor blow down vessel at a horizontal level different from the horizontal level of the first set of joining pieces.

In some embodiments, the high-pressure polymerization system further comprises
c) a pressure control valve,
d) a post reactor cooler, and
e) a separation vessel or a series of separation vessels,
wherein the post reactor cooler is in fluid communication with the continuously operated polymerization reactor via a first connecting line, wherein the separation vessel or the series of separation vessels is in fluid communication with the post reactor cooler via a second connecting line, and wherein the pressure control valve is adapted and arranged to control the fluid communication between the continuously operated polymerization reactor and the post reactor cooler.

The vent stack is a vertical tube having an inner diameter from 0.4 m to 1.4 m and the constricted section of the vent stack has a smaller inner diameter so that the open cross-sectional area at the constricted section is from 10% to 60% of the open cross-sectional area of the vertical tube.

In some embodiments, the release lines which connect the polymerization reactor with the reactor blow down vessel are heated to a temperature from 160°C to 240°C.

In some embodiments, the reactor blow down system further comprises
b4) a nitrogen blanketing system and/or
b5) a fil-level control system.

In some embodiments, the reactor blow down system further comprises
b6) a reactor blow down dump vessel arranged and adapted to be in fluid communication with the reactor blow down vessel, and
b7) at least one drain valve in the fluid communication between the reactor blow down vessel and the reactor blow down dump vessel adapted and arranged to open or close the fluid communication between the reactor blow down vessel and the reactor blow down dump vessel,
wherein the reactor blow down vessel is installed above the reactor blow down dump vessel.

The present disclosure further provides a process for polymerizing ethylene, and optionally one or more co-monomers, to obtain an ethylene-based polymer in a high-pressure polymerization system as defined in the above comprising
A) monitoring the high-pressure polymerization system with respect to an occurrence of a disturbance, and
B) opening at least one first emergency valve in case of a disturbance to allow the content of the polymerization system comprising polymer and gaseous components to expand into the reactor blow down vessel via the one or more release lines,
C) contacting said content in the reactor blow down vessel with the aqueous quenching medium to obtain an aqueous polymer slurry, and
D) separating the aqueous polymer slurry and the gaseous components.

In some embodiments, the process further comprises
E) transferring the aqueous polymer slurry to the reactor blow down dump vessel by opening the at least one drain valve.

In some embodiments, upon the occurrence of a disturbance or temporally offset to the occurrence of a disturbance steam is injected into the reactor blow down vessel.

In some embodiments, the injection of steam is suspended after about 120 to 300 seconds upon the occurrence of a disturbance.

### BRIEF DESCRIPTION OF THE DRAWINGS

To assist those of ordinary skill in the relevant art in making and using the subject matter hereof, reference is made to the appended drawings, wherein:
- Figure 1: shows schematically a set-up of a reactor blow down system of the present disclosure,
- Figure 2: depicts a schematic cross-sectional view of the reactor blow down system of the present disclosure according to Figure 1,
- Figure 3: depicts another schematic cross-sectional view of the reactor blow down system of the present disclosure according to Figure 1,
- Figure 4: depicts a schematic representation of an of the reactor blow down system of the present disclosure, and
- Figure 5: depicts a schematic representation of a section of the vent stack of the reactor blow down system according to Figure 4.

### DETAILED DESCRIPTION OF THE INVENTION

The present disclosure provides a high-pressure polymerization system comprising
a) a continuously operable polymerization reactor having a reactor inlet and having a reactor outlet and
b) a reactor blow down system adapted and arranged to be in fluid communication with the polymerization reactor, the reactor blow down system.
The present disclosure further provides a process for polymerizing ethylene, and optionally one or more co-monomers, to obtain an ethylene-based polymer in the high-pressure polymerization system. The process allows in case of a shutdown due to a disturbance to effectively quench the reactor content comprising both hot ethylene and hot polymer in a reactor blow down vessel, to separate most of the polymer from depressurized ethylene and to retain polymer and solids before releasing the gas, in particular at a lower noise level, into the atmosphere via a vent stack. Accordingly, a good dispersion of the released ethylene, a good noise reduction and a safe operation of the high-pressure polymerization system can be ensured.

In a preferred embodiment of the high-pressure polymerization system, the monomers are brought to the polymerization pressure by one or more compressors in a sequence of compression stages, the compressed monomers are optionally passed through a pre-heater or a pre-cooler and are then transferred into the polymerization reactor at the reactor inlet. In addition, a reaction mixture obtained by the polymerization leaves the reactor at the reactor outlet through a pressure control valve and is optionally cooled by an post reactor cooler. Subsequently, the reaction mixture is separated into polymeric and gaseous components in two or more stages, where the gaseous components separated off in a first stage at an absolute pressure of from 15 MPa to 50 MPa are recycled to the one or more compressors via a high-pressure gas recycle line and the gaseous components separated off in a second stage at an absolute pressure in the range of from 0.1 MPa to 0.5 MPa are recycled to the first stage of the sequence of compression stages via a low-pressure gas recycle line, and the polymeric components obtained by the polymerization are transformed into pellets.

Thus, in preferred embodiments, the high-pressure polymerization system further comprises
c) a pressure control valve,
d) a post reactor cooler, and
e) a separation vessel or a series of separation vessels,
wherein the post reactor cooler is in fluid communication with the continuously operated polymerization reactor via a first connecting line, wherein the separation vessel or the series of separation vessels is in fluid communication with the post reactor cooler via a second connecting line, and wherein the pressure control valve is adapted and arranged to control the fluid communication between the continuously operated polymerization reactor and the post reactor cooler.

It should be understood that the use of "and/or" is defined inclusively, such that the term "a and/or b" should be read to include the sets: "a and b", "a or b", "a", "b". Preferably, "and" in most cases "a and/or b" relates to two entities "a" and "b", wherein at least one of said entities is present in the embodiment described.

The polymerization is preferably a homopolymerization of ethylene or a copolymerization of ethylene with one or more other monomers, provided that these monomers are free-radically copolymerizable with ethylene under high pressure. Examples of copolymerizable monomers for use in the present technology are α,β-unsaturated C₃-C₈-carboxylic acids, derivatives of α,β-unsaturated C₃-C₈-carboxylic acids, e.g. unsaturated C₃-C₁₅-carboxylic esters or anhydrides, and 1-olefins. In addition, vinyl carboxylates, such as vinyl acetate, can be used as comonomers. Propene, 1-butene, 1-hexene, acrylic acid, n-butyl acrylate, tert-butyl acrylate, 2-ethylhexyl acrylate, vinyl acetate or vinyl propionate are particularly suitable as comonomer.

In the case of copolymerization, the proportion of comonomer or comonomers in the reaction mixture is from 1 to 50% by weight, preferably from 3 to 40% by weight, based on the amount of monomers, i.e. the sum of ethylene and other monomers. Depending on the type of comonomer, it can be preferred to feed the comonomers at more than one point to the reactor set-up. Preferably the comonomers are fed to the suction side of the secondary compressor.

For the purposes of the present disclosure, polymers or polymeric materials are substances which are made up of at least two monomer units. The polymers or polymeric materials are preferably low density polyethylenes having an average molecular weight Mn of more than 20 000 g/mole. The term "low density polyethylene" (LDPE) includes ethylene homopolymers and ethylene copolymers. The process of the present disclosure can also be employed in the preparation of oligomers, waxes and polymers having a molecular weight Mₙ of less than 20 000 g/mole.

The process of the present disclosure is preferably a radical polymerization carried out in the presence of free-radical polymerization initiators. Possible initiators for starting the polymerization in the respective reaction zones are in general any substances that can produce radical species under the conditions in the polymerization reactor, for example, oxygen, air, azo compounds or peroxidic polymerization initiators. In a preferred embodiment of the disclosure, the polymerization is carried out by using oxygen, either fed in the form of pure O₂ or as air. In case of initiating the polymerization with oxygen, the initiator is normally first mixed with the ethylene feed and then fed to the reactor. In such a case, it is not only possible to feed a stream comprising monomer and oxygen to the beginning of the polymerization reactor but also to one or more points along the reactor creating two or more reaction zones. Initiation using organic peroxides or azo compounds also represents a preferred embodiment of the present disclosure. It is possible to use either individual initiators or preferably mixtures of various initiators. A large range of initiators, in particular peroxides, are commercially available, for example the products of Akzo Nobel offered under the trade names Trigonox^{®} or Perkadox^{®}.

In the polymerization, the molecular weight of the polymers to be prepared can as usual be altered by the addition of modifiers which act as chain-transfer agents. Examples of modifiers for use in the present technology are hydrogen, aliphatic and olefinic hydrocarbons, e.g. propane, butane, pentane, hexane, cyclohexane, propene, 1-butene, 1-pentene or 1-hexene, ketones such as acetone, methyl ethyl ketone (2-butanone), methyl isobutyl ketone, methyl isoamyl ketone, diethyl ketone or diamyl ketone, aldehydes such as formaldehyde, acetaldehyde or propionaldehyde and saturated aliphatic alcohols such as methanol, ethanol, propanol, isopropanol or butanol. Particular preference is given to using saturated aliphatic aldehydes, in particular propionaldehyde or 1-olefins such as propene, 1-butene or 1-hexene, or aliphatic hydrocarbons such as propane.

The high polymerization is preferably carried out at pressures of from 110 MPa to 500 MPa, with pressures of from 160 MPa to 350 MPa being more preferred and pressures of from 200 MPa to 330 MPa being particularly preferred for polymerization in a tubular reactor and with pressures of from 110 MPa to 300 MPa being more preferred and pressures of from 120 MPa to 280 MPa being particularly preferred for polymerization in an autoclave reactor. The polymerization temperatures are preferably in the range of from 100°C to 350°C, and more preferably in the range of from 180°C to 340°C and particularly preferred from 200°C to 330°C for polymerization in a tubular reactor and more preferably in the range of from 110°C to 320°C and particularly preferred from 120°C to 310°C for polymerization in an autoclave reactor.

The polymerization can be carried out with all types of high-pressure reactors appropriate for high-pressure polymerization having a reactor inlet and having a reactor outlet. High-pressure reactors for use in the present technology are, for example, tubular reactors or autoclave reactors. Preferably the polymerization is carried out in one or more tubular reactors or one or more autoclave reactors or combinations of such reactors. In particularly preferred embodiments of the present disclosure, the polymerization reactor is a tubular reactor.

Common high-pressure autoclave reactors are stirred reactors and have a length-to-diameter ratio in a range from 2 to 30, preferably from 2 to 20. Such autoclave reactors have one or more reaction zones, preferably from 1 to 6 reaction zones and more preferably from 1 to 4 reaction zones. The number of reaction zones depends on the number of agitator baffles which separate individual mixed zones within the autoclave reactor. In high-pressure polymerization systems in which the polymerization or the first polymerization is carried out in an autoclave reactor, i.e. in high-pressure polymerization system in which the only polymerization reactor is an autoclave reactor or high-pressure polymerization system in which the first reactor of a series of reactors is an autoclave reactor, the reaction mixture coming from the compressors is usually first passed through a pre-cooler before entering the autoclave reactor.

Appropriate tubular reactors are basically long, thick-walled pipes, which are usually from about 0.5 km to 4 km, preferably from 1 km to 3 km and especially from 1.5 km to 2.5 km long. The inner diameter of the pipes is usually in the range of from about 30 mm to 120 mm and preferably from 60 mm to 100 mm. Such tubular reactors have preferably a length-to-diameter ratio of greater than 1000:1, preferably from 10000:1 to 40000:1 and especially from 25000:1 to 35000:1.

Preferred tubular reactors have at least two reaction zones, preferably from 2 to 6 reaction zones and more preferably from 2 to 5 reaction zones. The number of reaction zones is given by the number of feeding points for the initiator. Such a feeding point can, for example, be an injection point for a solution of azo compounds or organic peroxides. Fresh initiator is added to the reactor, where the initiator decomposes into free radicals and initiates further polymerization. The generated heat of the reaction raises the temperature of the reaction mixture, since more heat is generated than can be removed through the walls of the tubular reactor. The rising temperature increases the rate of decomposition of the free-radical initiators and accelerates polymerization until essentially all of the free-radical initiator is consumed. Thereafter, no further heat is generated and the temperature decreases again since the temperature of the reactor walls is lower than that of the reaction mixture. Accordingly, the part of the tubular reactor downstream of an initiator feeding point in which the temperature rises is the reaction zone, while the part thereafter, in which the temperature decreases again, is predominantly a cooling zone. The amount and nature of added free-radical initiators determines how much the temperature rises and accordingly allows for adjusting that value. Normally, the temperature rise is set to be in the range of from 70°C to 170°C in the first reaction zone and 50°C to 130°C for the subsequent reaction zones depending on the product specifications and the reactor configuration. Preferably, the tubular reactor is equipped with cooling jackets for removing the heat of the reaction. More preferably, all reaction zones of the tubular reactor are cooled by cooling jackets.

The compression of the reaction gas composition to the polymerization pressure is carried out by one or more compressors in a sequence of compression stages, where preferably a primary compressor first compresses the reaction gas composition to a pressure of from 10 MPa to 50 MPa and a secondary compressor further compresses the reaction gas composition to the polymerization pressure of from 110 MPa to 500 MPa. Preferably the primary compressor and the secondary compressor are multistage compressors. It is further possible to separate one or more stages of one or both of these compressors and divide the stages into separated compressors. However, usually a series of one primary compressor and one secondary compressor is used for compressing the reaction gas composition to the polymerization pressure. In such cases, sometimes the whole primary compressor is designated as primary compressor. However, it is also common to designate the one or more first stages of the primary compressor, which compress the recycle gas from the low- pressure product separator to the pressure of the fresh ethylene feed, as the booster compressor and then only the one or more subsequent stages as the primary compressor, although the booster compressor and the subsequent stages are all part of one apparatus.

In a preferred embodiment of the present disclosure, the high-pressure polymerization system comprises a pre-heater upstream of a tubular reactor for heating the reaction gas composition to a temperature capable of initiating the polymerization. In a preferred embodiment of the present disclosure the entire reaction gas composition provided by the secondary compressor is fed via a pre-heater to the inlet of the tubular reactor. In another preferred embodiment of the present disclosure only a part of the reaction gas composition compressed by the secondary compressor is fed via the pre-heater to the inlet of the tubular reactor and the remainder of the reaction gas composition compressed by the secondary compressor is fed as one or more side streams to the tubular reactor downstream of the inlet of the tubular reactor. In such a set-up preferably from 30 to 90% by weight, more preferably from 40 to 70% by weight of the reaction gas composition provided by the secondary compressor are fed to the inlet of the tubular reactor and from 10 to 70% by weight, more preferably from 30 to 60% by weight of the reaction gas composition provided by the secondary compressor are fed as one or more side streams to the tubular reactor downstream of the inlet of the tubular reactor.

The high-pressure polymerization system for carrying out the polymerization of the present disclosure preferably comprises, besides the polymerization reactor and the rector blow down system, two or more gas recycle lines for recycling unreacted monomers into the polymerization process. The reaction mixture obtained in the polymerization reactor is transferred to a first separation vessel, frequently called high-pressure product separator, and separated into a gaseous fraction and a liquid fraction at an absolute pressure of from 15 MPa to 50 MPa. The gaseous fraction withdrawn from the first separation vessel is fed via a high-pressure gas recycle line to the suction side of the secondary compressor. In the high- pressure gas recycle line, the gas is usually purified by several purification steps for removing undesired components such as entrained polymer or oligomers. The liquid fraction withdrawn from the first separation vessel, which usually still comprises dissolved monomers such as ethylene and comonomers in an amount of 20 to 40% of weight, is transferred to a second separation vessel, frequently called low-pressure product separator, and further separated, at reduced pressure, usually at an absolute pressure in the range of from 0.1 MPa to 0.5 MPa, in polymeric and gaseous components. The gaseous fraction withdrawn from the second separation vessel is fed via a so-called low-pressure gas recycle line to the primary compressor, preferably to the foremost of the stages. Also the low-pressure gas recycle line usually comprises several purification steps for purifying the gas from undesired components. The high-pressure polymerization system can further comprise additional separation steps for separating additional gaseous fractions from the reaction mixtures and additional gas recycle lines for feeding such additional gaseous fractions comprising not reacted monomers to one of the compressors, for example in-between the first separation step and the second separation step operating at an intermediate pressure.

Preferably, the recycled gas coming from the low-pressure gas recycle line is compressed by the first stages of the primary compressor to the pressure of the fresh feed of ethylenically unsaturated monomers, preferably ethylene, and thereafter combined with the fresh gas feed and the combined gases are further compressed in the primary compressor to the pressure of from 10 MPa to 50 MPa. Preferably the primary compressor comprises five or six compression stages, two or three before adding the fresh gas and two or three after adding the fresh gas. The secondary compressor has preferably two stages; a first stage, which compresses the gas to a pressure in the range from 50 MPa to 150 MPa, and a second stage, which further compresses the gas to the final polymerization pressure.

The pressure within the polymerization reactor is preferably controlled by a pressure control valve, which is arranged at the outlet of the polymerization reactor and through which the reaction mixture leaves the reactor. The pressure control valve can be any valve arrangement which is suitable for reducing the pressure of the reaction mixture leaving the reactor to the pressure within the first separation vessel.

In a preferred embodiment of the present disclosure, the high-pressure polymerization system comprises a post reactor cooler downstream of the polymerization reactor for cooling the reaction mixture. The post reactor cooler can be arranged upstream of the pressure control valve or the post reactor cooler can be arranged downstream of the pressure control valve. Preferably, the post reactor cooler is arranged downstream of the pressure control valve.

Preferred polymerization reactors are located in a chamber having a surrounding protective wall.

The polymeric components obtained by the polymerization are finally transformed into pellets, normally by apparatuses like extruders or granulators. Preferably, the ethylene-based polymer produced by the process is a LDPE having a density in the range from 0.910 g/cm³ to 0.940 g/cm³.

Besides the continuously operable polymerization reactor, the process of the present disclosure comprises
b) a reactor blow down system adapted and arranged to be in fluid communication with the polymerization reactor, the reactor blow down system comprising
b1) a reactor blow down vessel, which has an essentially circular design over a major portion P having a length L, a diameter D and a L/D-ratio in the range from 1.75 to 10.0, preferably in the range from 2.0 to 6.0, and in particular in the range from 2.0 to 4.0, and which contains an aqueous quenching medium,
b2) one or more release lines, which connect the polymerization reactor with the reactor blow down vessel and which comprise a release line outlet for expanding a content of the high-pressure polymerization system comprising polymer and gaseous components into the reactor blow down vessel, where the release line outlets are located above a maximum level for the aqueous quenching medium, and
b3) one or more first emergency valves arranged in the one or more release lines and adapted to open and close a fluid communication between the polymerization reactor and the reactor blow down system,

The release line outlets each have a joining piece which connects the release line with the major portion P of the reactor blow down vessel. In general, the joining pieces have a tubular, in particular cylindrical hollow space through which gaseous and polymeric material may enter the reactor blow down vessel. It is this tubular, in particular hollow space through which the central axis passes. The joining pieces have a central axis and are arranged in a way that an angle (α) formed between the central axis of the joining pieces and a tangent being located at the intersection of the central axis with the circular periphery of the major portion P of the reactor blow down vessel and having the same inclination as the central axis with respect to the horizontal plane containing this intersection is in the range from 5° to 70°, preferably in the range from 10° to 60°, and more preferably in the range from 15° to 50°.

In preferred embodiments of the present disclosure, one of the joining pieces, or a multitude of the joining pieces, or all of the joining pieces, and preferably all of the joining pieces are arranged essentially tangentially with regard to the horizontal circumference of said major portion P.

In preferred embodiments of the present disclosure, one of the joining pieces, or a multitude of the joining pieces, or all of the joining pieces, and preferably all of the joining pieces are inclined downwards such that the stream of the content of the high-pressure polymerization system comprising polymer and gaseous components is directed towards a surface of the aqueous quenching medium in the reactor blow down vessel.

In preferred embodiments of the present disclosure, one of the joining pieces, or a multitude of the joining pieces, or all of the joining pieces, and preferably all of the joining pieces have an angle of inclination (β) between the central axis of the joining pieces and horizontal planes passing through the major portion P of the reactor blow down vessel at the positions where the central axes cross the horizontal circumference of the major portion P is in the range from 3° to 89°, and preferably in the range from 5° to 45°.

The fluid communication between the polymerization reactor and the reactor blow down system can be provided by one or more release lines. Preferably, a multitude of release lines connects the polymerization reactor with the reactor blow down vessel.

In preferred embodiments of the present disclosure, a multitude or all of the joining pieces of the release line outlets of the release lines connecting the polymerization reactor with the reactor blow down vessel are located on the same horizontal level of the major portion P of the reactor blow down vessel. Alternatively, or in particular additionally, a multitude or all of the joining pieces of the release line outlets of the release lines connecting the polymerization reactor with the reactor blow down vessel are equidistantly or evenly distributed over the, in particular horizontal, circumference of the major portion P of the reactor blow down vessel. In another embodiment, it is also possible that not all but only a limited set of joining pieces of the release line outlets of the release lines connecting the polymerization reactor with the reactor blow down vessel are evenly or equidistantly distributed over the, in particular horizontal, circumference of the major portion P of the reactor blow down vessel.

In preferred embodiments of the present disclosure, a multitude of the joining pieces of the release line outlets of the release lines connecting the polymerization reactor with the reactor blow down vessel are equidistantly or evenly distributed over the circumference of the major portion P of the reactor blow down vessel. Preferably, all joining pieces of the release line outlets of the release lines connecting the polymerization reactor with the reactor blow down vessel are equidistantly or evenly distributed over the circumference of the major portion P of the reactor blow down vessel. In another embodiment, it is also possible that not all but only a limited set of joining pieces of the release line outlets of the release lines connecting the polymerization reactor with the reactor blow down vessel are evenly or equidistantly distributed over the, in particular horizontal, circumference of the major portion P of the reactor blow down vessel.

In particularly preferred embodiments of the present disclosure, a multitude or all of the joining pieces of the release line outlets of the release lines connecting the polymerization reactor with the reactor blow down vessel are arranged in two or more sets of joining pieces which are located on two or more horizontal levels. In these embodiment, a first set of joining pieces of release line outlets of the release lines connecting the polymerization reactor with the reactor blow down vessel is located on the same horizontal level of the major portion P of the reactor blow down vessel, wherein preferably a multitude of said first set of joining pieces is equidistantly or evenly distributed over the circumference of the major portion P of the reactor blow down vessel, and at least one second set of joining pieces, preferably the remaining joining pieces, of release line outlets of the release lines connecting the polymerization reactor with the reactor blow down vessel is aligned horizontally on the major portion P of the reactor blow down vessel at a horizontal level different from the horizontal level of the first set of joining pieces, wherein preferably a multitude of said second set of joining pieces is equidistantly or evenly distributed over the circumference of the major portion P of the reactor blow down vessel. In some further embodiments, it is even preferred that not all joining pieces of the first or second set, or of the first and second set, of joining pieces belong to those joining pieces which are evenly or equidistantly distributed over the circumference of the major portion P of the reactor blow down vessel, but only a reduced number of these joining pieces.

In preferred embodiments of the present disclosure, the release lines, which connect the polymerization reactor with the reactor blow down vessel are heated. Preferably, the release lines are heated over the whole length including the joining pieces. The release lines are preferably heated to a temperature from 160°C to 240°C and more preferably heated to a temperature from 180°C to 220°C. The heating can occur electrically, preferably the heating is conducted by heating with medium-pressure steam, preferably by conveying the medium-pressure steam through heating jackets.

In preferred embodiments, the reactor blow down system further comprises
b4) a nitrogen blanketing system and/or
b5) a fil-level control system.

The reactor blow down vessel b1) further comprises a vent stack which serves as gas outlet for removing the gaseous components having been separated from the aqueous polymer slurry. The vent stack is characterized in that it contains a constricted section, e.g. a throttle. In preferred embodiments of the present disclosure, the vent stack is a vertical tube having an inner diameter from 0.4 m to 1.4 m, more preferably from 0.5 m to 1.1 m and in particular from 0.7 m to 0.9 m. The constricted section of the vent stack has preferably a smaller inner diameter than the vertical tube so that the open cross-sectional area at the constricted section is from 10% to 60%, more preferably from 15% to 50% and in particular from 15% to 50% of the open cross-sectional area of the vertical tube. In preferred embodiments of the present disclosure, the upper opening of the vent stack is from 20 m to 80 m above ground level, more preferably from 30 m to 60 m above ground level, and in particular from 40 m to 50 m above ground level.

Preferably, the reactor blow down vessel is nitrogen blanketed although being open to the atmosphere.

In preferred embodiments of the present disclosure, the reactor blow down system further comprises
b6) a reactor blow down dump vessel arranged and adapted to be in fluid communication with the reactor blow down vessel, and
b7) at least one drain valve in the fluid communication between the reactor blow down vessel and the reactor blow down dump vessel adapted and arranged to open or close the fluid communication between the reactor blow down vessel and with the reactor blow down dump vessel,
wherein the reactor blow down vessel is installed above the reactor blow down dump vessel.

The present disclosure further provides a process for polymerizing ethylene, and optionally one or more comonomers, to obtain an ethylene-based polymer in a high-pressure polymerization system comprising
a) a continuously operated polymerization reactor having a reactor inlet and having a reactor outlet and
b) a reactor blow down system adapted and arranged to be in fluid communication with the polymerization reactor, the reactor blow down system comprising
   b1) a reactor blow down vessel, which has an essentially circular design over a major portion P having a length L, a diameter D and a L/D-ratio in the range from 1.75 to 10.0, preferably in the range from 2.0 to 6.0, and in particular in the range from 2.0 to 4.0, and which contains an aqueous quenching medium,
   b2) one or more release lines, which connect the polymerization reactor with the reactor blow down vessel and which comprise a release line outlet for expanding a content of the high-pressure polymerization system comprising polymer and gaseous components into the reactor blow down vessel, where the release line outlets are located above a maximum level for the aqueous quenching medium, and
   b3) one or more first emergency valves arranged in the one or more release lines and adapted to open and close a fluid communication between the polymerization reactor and the reactor blow down system,

wherein the release line outlets each have a joining piece, which has a central axis and which is arranged in a way that an angle (α) formed between the central axis of the joining piece and a tangent being located at the intersection of the central axis with the circular periphery of the major portion P of the reactor blow down vessel and having the same inclination as the central axis with respect to the horizontal plane containing this intersection is in the range from 5° to 70°,
wherein the reactor blow down vessel further comprises a vent stack containing a constricted section, and
wherein the process also comprises
   A) monitoring the high-pressure polymerization system with respect to an occurrence of a disturbance, and
   B) opening at least one first emergency valve in case of a disturbance to allow the content of the polymerization system comprising polymer and gaseous components to expand into the reactor blow down vessel via the one or more release lines, preferably the multitude of release lines,
   C) contacting said content in the reactor blow down vessel with the aqueous quenching medium to obtain an aqueous polymer slurry, and
   D) separating the aqueous polymer slurry and the gaseous components.

In preferred embodiments of the present disclosure, the process further comprises
E) transferring the aqueous polymer slurry to the reactor blow down dump vessel by opening the at least one drain valve.

According to the process of the present disclosure, the high-pressure polymerization system is monitored with respect to an occurrence of a disturbance. In case of a disturbance, the least one first emergency valve is opened and the content of the polymerization system comprising polymer and gaseous components is expand into the reactor blow down vessel. In this way, the high-pressure polymerization is interrupted in a controlled manner. Accordingly, a disturbance in the context of the present disclosure is any deviation of the normal polymerization conditions which is deemed significant enough that the polymerization has to be terminated. The monitoring of the high-pressure polymerization system occurs by measuring various parameters with respect to the conditions of the high-pressure polymerization system. These parameters include pressures and temperatures at various positions of the polymerization system, filling levels of vessels, positions of valves, hydrocarbon concentrations in the surrounding of the high-pressure polymerization system and vibrations in the polymerization system. If one of these parameters deviates significantly from the normal values, for example by differing more than 10% from a usually measured value, an occurrence of a disturbance is established and step B) of the process is carried out.

In some embodiments, upon the occurrence of a disturbance or temporally offset to the occurrence of a disturbance, in particular with a delay in the range from 2 to 30 seconds, more in particular in the range from 4 to 16 seconds, steam, preferably medium pressure steam, is injected into the reactor blow down vessel, in particular via the vent stack.

In some embodiments, the injection of steam into the reactor blow down vessel, in particular via the vent stack, is suspended after about 120 to 300 seconds, preferably after about 140 to 220 seconds, upon the occurrence of a disturbance.

In some embodiments of the present disclosure, the at least one drain valve is opened to transfer the aqueous polymer slurry to the reactor blow down dump vessel after the first emergency valve or any combination of previously open emergency valves have been closed. In a suitable embodiment of the present disclosure, the at least one drain valve is remotely operated or operable.

In another embodiment, the at least one drain valve is opened to transfer the aqueous polymer slurry to the reactor blow down dump vessel after the first emergency valve or any combination of previously open emergency valves have been closed.

In preferred embodiments of the present disclosure, following an occurrence of a disturbance, the polymerization is restarted after the reactor blow down vessel has been emptied, for example by transferring the aqueous polymer slurry to a reactor blow down dump vessel.

In preferred embodiments of the present disclosure, the first emergency valve or any combination of previously open emergency valves are closed after step B) as long as the fluid communication system, or the fluid communication system and the third connecting line and/or fourth connecting line are experiencing a positive pressure.

In preferred embodiments of the present disclosure, the reactor blow down vessel and the reactor blow down dump vessel are inside a protective enclosure, frequently called "reactor bay", and/or wherein the blow down separator or the combination of blow down separator elements and/or the circulation pump or the circulation pumps are outside a protective enclosure.

The aqueous quenching medium in most cases is water. In some cases, for example for the production of ethylene copolymers, the aqueous quenching medium in addition to water also comprises at least one polymerization inhibitor such as hydroquinone or pH buffer agents. Suitable buffer agents comprise for example phosphate buffers, e.g. obtained by mixing sodium hydrogen phosphate and sodium hydroxide.

With the process of the present disclosure, the content of the polymerization system is expanded into the reactor blow down vessel and contacted with the aqueous quenching system. In this manner, the pressure in the continuous high-pressure polymerization system can be rapidly reduced, e.g. within a minute or even less from about or above 200 MPa to 0.1 MPa. While the gaseous components are released from this vessel, the water/polymer mixture can be removed from the reactor blow down dump vessel.

Further features and advantages of the present disclosure will become apparent from the following description, in which exemplary embodiments of the disclosure are explained with reference to schematic drawings, by way of example and without limiting the invention.

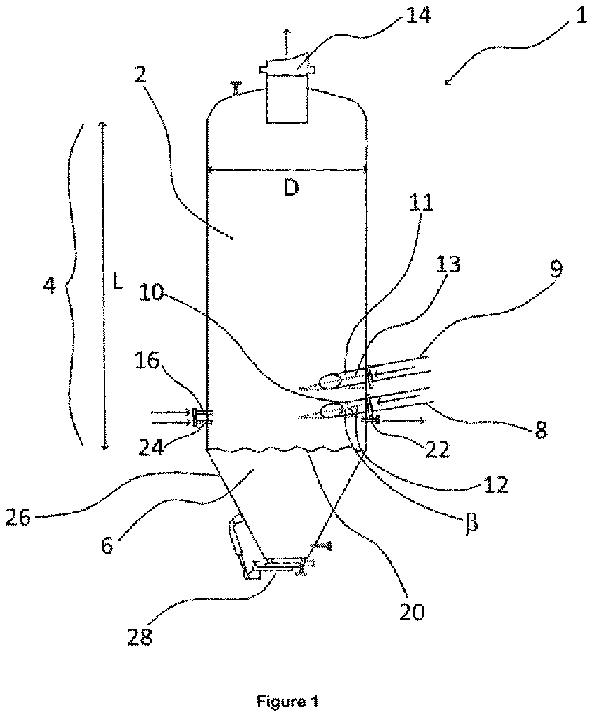

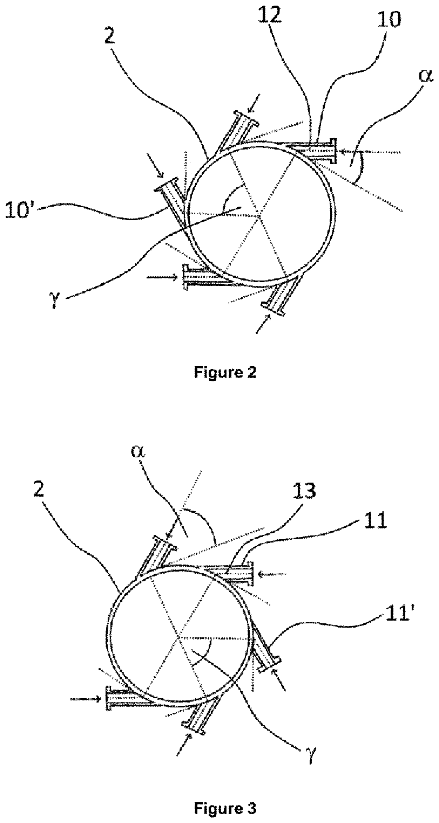

Figure 1 shows schematically one possible set-up of a reactor blow down system (1) of the present disclosure comprising a reactor blow down vessel (2), lower release line outlets (8), and upper release line outlets (9) and a vent stack (14). The reactor blow down vessel (2) has a cylindrical portion having a length L which is designated "major portion P" (4). Said major portion P (4) has a diameter D. In the schematic representation of Figure 1 the major portion P (4) has an LID ratio of about 2.1. Above said major portion P (4), the reactor blow down vessel (2) comprises a tapered lid-like portion the center part of which is equipped with the lower part of the vent stack (14). The lower part (26) of the reactor blow down vessel (2) has a conical shape and in use comprises the aqueous quenching medium (6). In the embodiment depicted in Figure 1, the surface (20) of the aqueous quenching medium (6) is lying beneath the overflow valve (22). The aqueous quenching medium (6) can be added to the reactor blow down vessel (2) via water inlet valve (24). Nitrogen for blanketing the reactor blow down vessel can be introduced through nitrogen inlet (16). The lower and upper release line outlets (8),(9) each comprise a joining piece (10) and (11), respectively, through which hot gas and hot polymer enters into the reactor blow down vessel (2) in case of a disturbance of the polymerization process occurring, for example, at the polymerization reactor. The joining pieces (10),(11) are oriented in such a manner that the angle of inclination (β) between the central axes (12),(13) of the respective joining pieces (10) and (11), respectively, and the horizontal plane passing through the major portion P (4) of the reactor blow down vessel (2) where said central axes (12) and (13), respectively, cross the horizontal circumference of said major portion P (4) is about 12° in each case in the embodiment shown in Figure 1. Moreover, with the embodiment of the reactor blow down system (1) of Figure 1 the joining pieces (10) and (11) are arranged essentially tangentially with regard to the horizontal circumference of said major portion P (4) as can be derived from Figures 2 and 3 and as will be described in more detail in the following. For the ease of representation in Figure 1, only one joining piece (10) connected to an accompanying release line outlet (8) is depicted on a first horizontal level as a representative for a multitude of such joining pieces (see Figure 2), and another joining piece (11) connected to an accompanying release line outlet (9) is depicted on a second horizontal level, lying above said first horizontal level, as a representative for a multitude of such joining pieces (see Figure 3). At the bottom of the conically shaped lower part (26) of the reactor blow down vessel (2), there is an outlet (28) which can be remotely opened and closed and through which sedimented polymer can be removed.

Figure 2 depicts a cross-sectional view through the major portion P (4) at the level of the lower joining piece (10) as shown in Figure 1, and Figure 3 depicts a cross-sectional view through the major portion P (4) at the upper level of the joining piece (11). From Figure 2 it can be derived that the reactor blow down vessel (2) at said lower level comprises in total five joining pieces (10) all of which are arranged essentially tangentially with regard to the circumference of the major portion P (4). The angle (α) between the central axes (12) of these joining pieces (10) and the respective tangents at the crossing points between the respective central axes (12) and the circumference of the major body portion P (4) is in each case about 42°. The tangent has the same inclination to the horizontal plane which extends through the major portion P at the level of the entry of the central axis into the circular perimeter of the section P, as the central axis (12). Three of the five lower joining pieces (10) essentially have the same distance along the circumference to their respective neighboring joining pieces (10). The center angle (γ) between these adjacent joining pieces (10) is about 30° with the embodiment of the reactor blow down vessel (2) as shown in Figure 2. Hot gases and hot polymer material entering into the reactor blow down vessel (2) through the lower joining pieces (10) will be directed first along the inner wall of the cylindrical major portion P (4) of the reactor blow down vessel (2). The design of the second set of joining pieces (11) at the upper level is rather similar to that of the joining pieces (10) at the lower level. Again, the angle (α) between the central axes (13) of these upper joining pieces (11) and the respective tangents at the crossing points between the respective central axes (13) and the circumference of the major body portion P (4) is in each case about 42°. Three of the five upper joining pieces (11) essentially have the same distance along the circumference to their respective neighboring joining pieces (10). The center angle (γ) between these adjacent joining pieces (11) is about 30°. The joining piece (10') which has no opposite counterpart at the lower level is having its respective opposite counterpart (11') at the upper level.

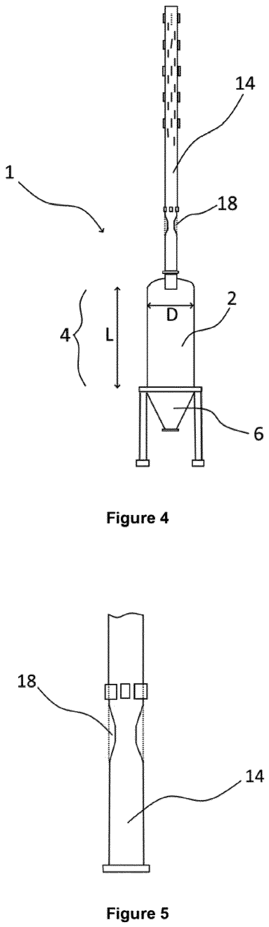

Figure 4 shows a rough simplified schematic representation of the reactor blow down system (1) as shown in Figure 1. A vent stack (14) is extending from the center of the upper part of the reactor blow down vessel (2). The hot gas separated from the polymeric material introduced into the reactor blow down vessel (2) escapes through the vent stack (14). By employing a constricted section (18) as part of the vent stack (14), the noise generated by released gases can be significantly reduced. From Figure 5, an enlarged representation of that section of the vent stack (14) can be derived containing the constricted section (18).

Surprisingly it was found that in case of a disturbance or even an emergency, e.g. due to the reactor pressure and/or the reactor temperature being above safe threshold values, the hot gas flows and the hot polymerization material of the polymerization reactor can be effectively quenched and cooled by having the gas and the polymerization material introduced into a reactor blow down vessel exhibiting a defined L/D ratio via release lines being equipped with joining pieces which are tangentially arranged with regard to the circumference of the major, cylindrical portion of the reactor blow down vessel and which in particular are additionally inclined downwards towards the surface of the aqueous quenching medium. Accordingly, with the high-pressure polymerization system according the present disclosure the momentum of the gas and material flow is significantly attenuated in a controlled manner resulting in a good quenching of the polymer / gas mixture in the reactor blow down vessel without releasing significant amounts of polymeric material or even without releasing essentially any amounts of polymeric material into the atmosphere via the vent stack. Without being bound by theory it is believed that this is accomplished by a rather comprehensive mixing of polymeric material and water in the reactor blown down vessel. The polymeric material can be efficiently and comprehensively separated from the quenched reactor content comprising both hot ethylene and hot polymer in the reactor blow down vessel so that essentially all solids can be retained. It is another advantage of the high-pressure polymerization system according the present disclosure that the quenched gas flow is released into the atmosphere via a vent stack at a particular low noise level. Accordingly, a good dispersion of the released ethylene, a good noise reduction and a safe operation of the high-pressure polymerization system can be ensured with the process of the present disclosure by relying on a reactor blow down vessel exhibiting said defined LID ratio, in particular when combined with a vent stack having at least one constricted area. It is another surprising finding that by injecting steam into the reactor blowdown vessel via the vent stack triggered by the release of hot gas flows and hot polymeric material into the reactor blowdown vessel via the joining pieces, ethylene dispersion and quenching of the ethylene / polymer mixture can be enhanced and noise formation be further reduced.

With the process and the high-pressure polymerization system of the present disclosure, the reactor can be automatically depressurized by automatically opening the least one emergency valve in case of any disturbance or emergency thereby putting the reactor into safe condition. That is, polymerization can not only be stopped safely in case of an emergency like fire, explosion, earthquake or polyethylene decomposition but also if deviations, i.e. disturbances, from the standard operating conditions, e.g. by exceeding pre-defined threshold values, are detected.

## Claims

1. A high-pressure polymerization system comprising
a) a continuously operable polymerization reactor having a reactor inlet and having a reactor outlet and
b) a reactor blow down system (1) adapted and arranged to be in fluid communication with the polymerization reactor, the reactor blow down system (1) comprising
b1) a reactor blow down vessel (2), which has an essentially circular design over a major portion P (4) having a length L, a diameter D and a L/D-ratio in the range from 1.75 to 10.0, preferably in the range from 2.0 to 6.0, and in particular in the range from 2.0 to 4.0, and which contains an aqueous quenching medium (6),
b2) one or more release lines, which connect the polymerization reactor with the reactor blow down vessel (2) and which comprise a release line outlet (8),(9) for expanding a content of the high-pressure polymerization system comprising polymer and gaseous components into the reactor blow down vessel (2), where the release line outlets (8),(9) are located above a maximum level for the aqueous quenching medium (6), and
b3) one or more first emergency valves arranged in the one or more release lines and adapted to open and close a fluid communication between the polymerization reactor and the reactor blow down system (1),
wherein the release line outlets (8),(9) each have a joining piece (10),(11), which has a central axis (12),(13) and which is arranged in a way that an angle (α) formed between the central axis (12),(13) of the joining piece (10),(11) and a tangent being located at the intersection of the central axis (12),(13) with the circular periphery of the major portion P (4) of the reactor blow down vessel (2) and having the same inclination as the central axis (12),(13) with respect to the horizontal plane containing this intersection is in the range from 5° to 70°, preferably in the range from 10° to 60°, and more preferably in the range from 15° to 50°, and
wherein the reactor blow down vessel (2) further comprises a vent stack (14) for venting the gaseous components into the atmosphere, the vent stack (14) containing a constricted section (18), wherein the vent stack (14) is a vertical tube having an inner diameter from 0.4 m to 1.4 m and the constricted section (18) of the vent stack (14) has a smaller inner diameter so that the open cross-sectional area at the constricted section is from 10% to 60% of the open cross-sectional area of the vertical tube.

2. The high-pressure polymerization system of claim 1, wherein the joining pieces (10),(11) are arranged essentially tangentially with regard to the horizontal circumference of said major portion P (4).

3. The high-pressure polymerization system of claim 1 or 2, wherein the joining pieces (10),(11) are inclined downwards such that the stream of the content of the high-pressure polymerization system comprising polymer and gaseous components is directed towards a surface of the aqueous quenching medium (6) in the reactor blow down vessel (2).

4. The high-pressure polymerization system of claim 3, wherein an angle of inclination (β) between the central axis (12),(13) of the joining pieces (10),(11) and horizontal planes passing through the major portion P (4) of the reactor blow down vessel (2) at the positions where the central axis (12),(13) crosses the horizontal circumference of the major portion P (4) is in the range from 3° to 89°, and preferably in the range from 5° to 45°.

5. The high-pressure polymerization system of any of claims 1 to 4, wherein a multitude of release lines connects the polymerization reactor with the reactor blow down vessel (2).

6. The high-pressure polymerization system of claim 5, wherein a multitude of the joining pieces (10),(11) of the release line outlets (8),(9) of the release lines connecting the polymerization reactor with the reactor blow down vessel (2) are located on the same horizontal level of the major portion P (4) of the reactor blow down vessel (2), and/or
wherein a multitude of the joining pieces (10),(11) of the release line outlets (8),(9) of the release lines connecting the polymerization reactor with the reactor blow down vessel (2) are equidistantly or evenly distributed over the circumference of the major portion P (4) of the reactor blow down vessel (2).

7. The high-pressure polymerization system of claim 6, wherein a first set of joining pieces (10) of release line outlets (8) of the release lines connecting the polymerization reactor with the reactor blow down vessel (2) is located on the same horizontal level of the major portion P (4) of the reactor blow down vessel (2), preferably wherein a multitude of said first set of joining pieces (10) is equidistantly or evenly distributed over the circumference of the major portion P (4) of the reactor blow down vessel (2), and wherein
at least one second set of joining pieces (11) of release line outlets (9) of the release lines connecting the polymerization reactor with the reactor blow down vessel (2) is aligned horizontally on the major portion P (4) of the reactor blow down vessel (2) at a horizontal level different from the horizontal level of the first set of joining pieces (10), preferably wherein a multitude of said second set of joining pieces (11) is equidistantly or evenly distributed over the circumference of the major portion P (4) of the reactor blow down vessel (2).

8. The high-pressure polymerization system of any of claims 1 to 7, further comprising
c) a pressure control valve,
d) a post reactor cooler, and
e) a separation vessel or a series of separation vessels,
wherein the post reactor cooler is in fluid communication with the continuously operated polymerization reactor via a first connecting line, wherein the separation vessel or the series of separation vessels is in fluid communication with the post reactor cooler via a second connecting line, and wherein the pressure control valve is adapted and arranged to control the fluid communication between the continuously operated polymerization reactor and the post reactor cooler.

9. The high-pressure polymerization system of any of claims 1 to 8, wherein the reactor blow down system (1) further comprises
b4) a nitrogen blanketing system and/or
b5) a fil-level control system.

10. The high-pressure polymerization system of any of claims 1 to 9, wherein the reactor blow down system (1) further comprises
b6) a reactor blow down dump vessel arranged and adapted to be in fluid communication with the reactor blow down vessel (2), and
b7) at least one drain valve in the fluid communication between the reactor blow down vessel (2) and the reactor blow down dump vessel adapted and arranged to open or close the fluid communication between the reactor blow down vessel (2) and the reactor blow down dump vessel,
wherein the reactor blow down vessel (2) is installed above the reactor blow down dump vessel.

11. A process for polymerizing ethylene, and optionally one or more co-monomers, to obtain an ethylene-based polymer in a high-pressure polymerization system according to any of claims 1 to 10 comprising
A) monitoring the high-pressure polymerization system (1) with respect to an occurrence of a disturbance, and
B) opening at least one first emergency valve in case of a disturbance to allow the content of the polymerization system comprising polymer and gaseous components to expand into the reactor blow down vessel (2) via the one or more release lines,
C) contacting said content in the reactor blow down vessel (2) with the aqueous quenching medium (6) to obtain an aqueous polymer slurry, and
D) separating the aqueous polymer slurry and the gaseous components.

12. The process of claim 11, wherein, upon the occurrence of a disturbance or temporally offset to the occurrence of a disturbance, in particular with a delay in the range from 2 to 30 seconds, more in particular in the range from 4 to 16 seconds, steam, preferably medium pressure steam, is injected into the reactor blow down vessel, in particular via the vent stack.

13. The process according to claim 12, wherein the injection of steam is suspended after about 120 to 300 seconds, preferably after about 140 to 220 seconds, upon the occurrence of a disturbance.

14. The process according to any one of claims 11 to 13, wherein the release lines which connect the polymerization reactor with the reactor blow down vessel (2) are heated to a temperature from 160°C to 240°C.

## Patentansprüche

1. Hochdruckpolymerisationssystem, umfassend:
a) einen kontinuierlich betreibbaren Polymerisationsreaktor mit einem Reaktoreinlass und einem Reaktorauslass, und
b) ein Reaktorausblassystem, (1) das eingerichtet und angeordnet ist, um in Fluidkommunikation mit dem Polymerisationsreaktor zu sein, wobei das Reaktorausblassystem (1) umfasst:
b1) ein Reaktorausblasgefäß (2), das ein im Wesentlichen kreisförmiges Design über einen Hauptanteil P (4) mit einer Länge L, einem Durchmesser D und einem L/D-Verhältnis im Bereich von 1,75 bis 10,0, vorzugsweise im Bereich von 2,0 bis 6,0 und insbesondere im Bereich von 2,0 bis 4,0 hat, und das ein wässriges Quenchmedium (6) enthält,
b2) eine oder mehrere Entlastungsleitungen, welche den Polymerisationsreaktor mit dem Reaktorausblasgefäß (2) verbinden und die einen Entlastungsleitungsauslass (8), (9) umfassen, um einen Inhalt des Hochdruckpolymerisationssystems, der Polymer und gasförmige Komponenten umfasst, in das Reaktorausblasgefäß (2) zu expandieren, wobei die Entlastungsleitungsauslässe (8), (9) sich über einem Maximalniveau für das wässrige Quenchmedium (6) befinden, und
b3) ein oder mehrere erste Notfallventile, die in der einen oder den mehreren Entlastungsleitungen angeordnet sind und eingerichtet sind, um eine Fluidkommunikation zwischen dem Polymerisationsreaktor und dem Reaktorausblassystem (1) zu öffnen und zu schließen,
wobei die Entlastungsleitungsauslässe (8), (9) jeweils ein Verbindungsstück (10), (11) aufweisen, das eine Zentralachse (12), (13) aufweist und in einer solchen Weise angeordnet ist, dass ein Winkel (α), der zwischen der Zentralachse (12), (13) des Verbindungsstückes (10), (11) und einer Tangente gebildet ist, die sich an der Kreuzung der Zentralachse (12), (13) mit der kreisförmigen Peripherie des Hauptanteils P (4) des Reaktorausblasgefäßes (2) befindet, und die gleiche Neigung wie die Zentralachse (12), (13) in Bezug zu der horizontalen Ebene hat, die diese Kreuzung enthält, im Bereich von 5° bis 70°, vorzugsweise im Bereich von 10° bis 60° und bevorzugter im Bereich von 15° bis 50° liegt, und
wobei das Reaktorausblasgefäß (2) des Weiteren einen Entlüftungskamin (14) zum Entlüften der gasförmigen Komponenten in die Atmosphäre umfasst, wobei der Entlüftungskamin (14) ein verengtes Segment (18) enthält, wobei der Entlüftungskamin (14) ein vertikales Rohr mit einem Innendurchmesser von 0,4 m bis 1,4 m ist, und das verengte Segment (18) des Entlüftungskamins (14) einen kleineren inneren Durchmesser hat, so dass die offene Querschnittfläche an dem verengten Segment 10 % bis 60 % der offenen Querschnittfläche des vertikalen Rohrs beträgt.

2. Hochdruckpolymerisationssystem nach Anspruch 1, wobei die Verbindungsstücke (10), (11) im Wesentlichen tangential in Hinsicht auf den horizontalen Umfang des Hauptanteils P (4) angeordnet sind.

3. Hochdruckpolymerisationssystem nach Anspruch 1 oder 2, wobei die Verbindungsstücke (10), (11) abwärts geneigt sind, so dass der Strom des Inhalts des Hochdruckpolymerisationssystems, der Polymer und gasförmige Komponenten umfasst, in Richtung einer Oberfläche des wässrigen Quenchmediums (6) in dem Reaktorausblasgefäß (2) gelenkt wird.

4. Hochdruckpolymerisationssystem nach Anspruch 3, wobei ein Neigungswinkel (β) zwischen der Zentralachse (12), (13) der Verbindungsstücke (10), (11) und horizontalen Ebenen, die den Hauptanteil P (4) des Reaktorausblasgefäßes (2) an den Positionen durchlaufen, an denen die Zentralachse (12), (13) den horizontalen Umfang des Hauptanteils P (4) kreuzt, im Bereich von 3° bis 89° und vorzugsweise im Bereich von 5° bis 45° liegt.

5. Hochdruckpolymerisationssystem nach einem der Ansprüche 1 bis 4, wobei eine Vielzahl von Entlastungsleitungen den Polymerisationsreaktor mit dem Reaktorausblasgefäß (2) verbindet.

6. Hochdruckpolymerisationssystem nach Anspruch 5, wobei eine Vielzahl der Verbindungsstücke (10), (11) der Entlastungsleitungsauslässe (8), (9) der Entlastungsleitungen, die den Polymerisationsreaktor mit dem Reaktorausblasgefäß (2) verbinden, sich auf dem gleichen horizontalen Niveau des Hauptanteils P (4) des Reaktorausblasgefäßes (2) befinden, und/oder
wobei eine Vielzahl der Verbindungsstücke (10), (11) der Entlastungsleitungsauslässe (8), (9) der Entlastungsleitungen, die den Polymerisationsreaktor mit dem Reaktorausblasgefäß (2) verbinden, äquidistant oder gleichförmig über den Umfang des Hauptanteils P (4) des Reaktorausblasgefäßes (2) verteilt sind.

7. Hochdruckpolymerisationssystem nach Anspruch 6, wobei ein erster Satz von Verbindungsstücken (10) von Entlastungsleitungsauslässen (8) der Entlastungsleitungen, die den Polymerisationsreaktor mit dem Reaktorausblasgefäß (2) verbinden, sich auf dem gleichen horizontalen Niveau des Hauptanteils P (4) des Reaktorausblasgefäßes (2) befindet, wobei vorzugsweise eine Vielzahl des ersten Satzes von Verbindungsstücken (10) äquidistant oder gleichförmig über den Umfang des Hauptanteils P (4) des Reaktorausblasgefäßes (2) verteilt ist, und wobei
mindestens ein zweiter Satz von Verbindungsstücken (11) der Entlastungsleitungsauslässe (9) der Entlastungsleitungen, die den Polymerisationsreaktor mit dem Reaktorausblasgefäß (2) verbinden, horizontal auf dem Hauptanteils P (4) des Reaktorausblasgefä-ßes (2) auf einem horizontalen Niveau ausgerichtet ist, das sich von dem horizontalen Niveau des ersten Satzes von Verbindungsstücken (10) unterscheidet, wobei vorzugsweise eine Vielzahl des zweiten Satzes von Verbindungsstücken (11) äquidistant oder gleichförmig über den Umfang des Hauptanteils P (4) des Reaktorausblasgefäßes (2) verteilt ist.

8. Hochdruckpolymerisationssystem nach einem der Ansprüche 1 bis 7, des Weiteren umfassend:
c) ein Drucksteuerventil,
d) einen nachgeschalteten Reaktorkühler und
e) ein Trenngefäß oder eine Serie von Trenngefäßen,
wobei der nachgeschaltete Reaktorkühler über eine erste Verbindungsleitung in Fluidkommunikation mit dem kontinuierlich betriebenen Polymerisationsreaktor ist, wobei das Trenngefäß oder die Reihe von Trenngefäßen über eine zweite Verbindungsleitung in Fluidkommunikation mit dem nachgeschalteten Reaktorkühler ist, und wobei das Drucksteuerventil eingerichtet und angeordnet ist, um die Fluidkommunikation zwischen dem kontinuierlich betriebenen Polymerisationsreaktor und dem nachgeschalteten Reaktorkühler zu steuern.

9. Hochdruckpolymerisationssystem nach einem der Ansprüche 1 bis 8, wobei das Reaktorausblassystem (1) des Weiteren umfasst:
b4) ein Stickstoffschutzgassystem und/oder
b5) ein Füllniveausteuersystem.

10. Hochdruckpolymerisationssystem nach einem der Ansprüche 1 bis 9, wobei das Reaktorausblassystem (1) des Weiteren umfasst:
b6) ein Reaktorausblasablagegefäß, das angeordnet und eingerichtet ist, um in Fluidkommunikation mit dem Reaktorausblasgefäß (2) zu sein, und
b7) mindestens ein Ablaufventil in der Fluidkommunikation zwischen dem Reaktorausblasgefäß (2) und dem Reaktorausblasablagegefäß, das eingerichtet und angeordnet ist, um die Fluidkommunikation zwischen dem Reaktorausblasgefäß (2) und dem Reaktorausblasablagegefäß zu öffnen und zu schließen,
wobei das Reaktorausblasgefäß (2) oberhalb des Reaktorausblasablagegefäßes installiert ist.

11. Verfahren zum Polymerisieren von Ethylen und gegebenenfalls einem oder mehreren Comonomeren, um ein Polymer auf Ethylenbasis in einem Hochdruckpolymerisationssystem nach einem der Ansprüche 1 bis 10 zu erhalten, umfassend:
A) Überwachen des Hochdruckpolymerisationssystems (1) in Bezug auf ein Vorkommen einer Störung, und
B) Öffnen von mindestens einem ersten Notfallventil im Fall einer Störung, um zu ermöglichen, dass der Inhalt des Polymerisationssystems, der Polymer und gasförmige Komponenten umfasst, über die eine oder mehreren Entlastungsleitungen in das Reaktorausblasgefäß (2) expandiert,
C) Kontaktieren des Inhalts in dem Reaktorausblasgefäß (2) mit dem wässrigen Quenchmedium (6), um eine wässrige Polymeraufschlämmung zu erhalten, und
D) Trennen der wässrigen Polymeraufschlämmung und der gasförmigen Komponenten.

12. Verfahren nach Anspruch 11, wobei beim Vorkommen einer Störung oder in zeitlichem Versatz zu dem Vorkommen einer Störung, insbesondere mit einer Verzögerung im Bereich von 2 bis 30 Sekunden, spezieller im Bereich von 4 bis 16 Sekunden, Wasserdampf, insbesondere Mitteldruckwasserdampf, in das Reaktorausblasgefäß injiziert wird, insbesondere über den Entlüftungskamin.

13. Verfahren nach Anspruch 12, wobei das Injizieren von Wasserdampf nach etwa 120 bis 300 Sekunden, vorzugsweise nach etwa 140 bis 220 Sekunden, bei Vorkommen einer Störung ausgesetzt wird.

14. Verfahren nach einem der Ansprüche 11 bis 13, wobei die Entlastungsleitungen, die den Polymerisationsreaktor mit dem Reaktorausblasgefäß (2) verbinden, auf eine Temperatur von 160 °C bis 240 °C erwärmt werden.

## Revendications

1. Système de polymérisation à haute pression comprenant
a) un réacteur de polymérisation à fonctionnement continu présentant une entrée de réacteur et une sortie de réacteur et
b) un système de décompression de réacteur (1) conçu et agencé pour être en communication fluidique avec le réacteur de polymérisation, le système de décompression de réacteur (1) comprenant
b1) une cuve de décompression de réacteur (2), qui présente une conception essentiellement circulaire sur une partie principale P (4) présentant une longueur L, un diamètre D et un rapport L/D situé dans la plage de 1,75 à 10,0, de préférence dans la plage de 2,0 à 6,0 et en particulier dans la plage de 2,0 à 4,0 et qui contient un milieu de refroidissement brusque aqueux (6),
b2) une ou plusieurs lignes de dégagement, qui relient le réacteur de polymérisation à la cuve de décompression de réacteur (2) et qui comprennent une sortie de ligne de dégagement (8), (9) destinée à dilater un contenu du système de polymérisation à haute pression comprenant un polymère et des constituants gazeux dans la cuve de décompression de réacteur (2), où les sorties de ligne de dégagement (8), (9) sont situées au-dessus d'un niveau maximal pour le milieu de refroidissement brusque aqueux (6) et
b3) une ou plusieurs premières vannes d'urgence disposées dans ladite une ou lesdites plusieurs lignes de dégagement et conçues pour ouvrir et fermer une communication fluidique entre le réacteur de polymérisation et le système de décompression de réacteur (1),
les sorties de ligne de dégagement (8), (9) présentant chacune une pièce de raccord (10), (11) qui présente un axe central (12), (13) et qui est agencée de telle sorte qu'un angle (α) formé entre l'axe central (12), (13) de la pièce de raccord (10), (11) et une tangente située à l'intersection de l'axe central (12), (13) avec la périphérie circulaire de la partie principale P (4) de la cuve de décompression de réacteur (2) et présentant la même inclinaison que l'axe central (12), (13) par rapport au plan horizontal contenant cette intersection est situé dans la plage de 5° à 70°, de préférence dans la plage de 10° à 60° et plus préférablement dans la plage de 15° à 50° et
la cuve de décompression de réacteur (2) comprenant en outre une colonne de ventilation (14) destinée à évacuer les constituants gazeux dans l'atmosphère, la colonne de ventilation (14) contenant une section rétrécie (18), la colonne de ventilation (14) étant un tube vertical présentant un diamètre interne de 0,4 m à 1,4 m et la section rétrécie (18) de la colonne de ventilation (14) présentant un diamètre interne plus petit de telle sorte que l'aire transversale ouverte au niveau de la section rétrécie représente 10 % à 60 % de l'aire transversale ouverte du tube vertical.

2. Système de polymérisation à haute pression selon la revendication 1, les pièces de raccord (10), (11) étant agencées de manière essentiellement tangentielle par rapport à la circonférence horizontale de ladite partie principale P (4).

3. Système de polymérisation à haute pression selon la revendication 1 ou 2, les pièces de raccord (10), (11) étant inclinées vers le bas de telle sorte que le flux du contenu du système de polymérisation à haute pression comprenant un polymère et des constituants gazeux est orienté vers une surface du milieu de refroidissement brusque aqueux (6) dans la cuve de décompression de réacteur (2).

4. Système de polymérisation à haute pression selon la revendication 3, un angle d'inclinaison (β) entre l'axe central (12), (13) des pièces de raccord (10), (11) et des plans horizontaux passant à travers la partie principale P (4) de la cuve de décompression de réacteur (2) au niveau des positions où l'axe central (12), (13) croise la circonférence horizontale de la partie principale P (4) étant situé dans la plage de 3° à 89° et de préférence dans la plage de 5° à 45°.

5. Système de polymérisation à haute pression selon l'une quelconque des revendications 1 à 4, une multitude de lignes de dégagement reliant le réacteur de polymérisation à la cuve de décompression de réacteur (2).

6. Système de polymérisation à haute pression selon la revendication 5, une multitude des pièces de raccord (10), (11) des sorties de ligne de dégagement (8), (9) des lignes de dégagement reliant le réacteur de polymérisation à la cuve de décompression de réacteur (2) étant situées sur le même niveau horizontal de la partie principale P (4) de la cuve de décompression de réacteur (2) et/ou
une multitude des pièces de raccord (10), (11) des sorties de ligne de dégagement (8), (9) des lignes de dégagement reliant le réacteur de polymérisation à la cuve de décompression de réacteur (2) étant réparties de manière équidistante ou régulière sur la circonférence de la partie principale P (4) de la cuve de décompression de réacteur (2).

7. Système de polymérisation à haute pression selon la revendication 6, un premier ensemble de pièces de raccord (10) de sorties de ligne de dégagement (8) des lignes de dégagement reliant le réacteur de polymérisation à la cuve de décompression de réacteur (2) étant situé sur le même niveau horizontal de la partie principale P (4) de la cuve de décompression de réacteur (2), de préférence une multitude dudit premier ensemble de pièces de raccord (10) étant répartie de manière équidistante ou régulière sur la circonférence de la partie principale P (4) de la cuve de décompression de réacteur (2) et
au moins un deuxième ensemble de pièces de raccord (11) de sorties de ligne de dégagement (9) des lignes de dégagement reliant le réacteur de polymérisation à la cuve de décompression de réacteur (2) étant aligné horizontalement sur la partie principale P (4) de la cuve de décompression de réacteur (2) à un niveau horizontal différent du niveau horizontal du premier ensemble de pièces de raccord (10), de préférence une multitude dudit deuxième ensemble de pièces de raccord (11) étant répartie de manière équidistante ou régulière sur la circonférence de la partie principale P (4) de la cuve de décompression de réacteur (2).

8. Système de polymérisation à haute pression selon l'une quelconque des revendications 1 à 7, comprenant en outre
c) une vanne de régulation de pression,
d) un refroidisseur post-réacteur et
e) un cuve de séparation ou une série de cuves de séparation,
le refroidisseur post-réacteur étant en communication fluidique avec le réacteur de polymérisation à fonctionnement continu par l'intermédiaire d'une première ligne de liaison, la cuve de séparation ou la série de cuves de séparation étant en communication fluidique avec le refroidisseur post-réacteur par l'intermédiaire d'une deuxième ligne de liaison et la vanne de régulation de pression étant conçue et agencée pour réguler la communication fluidique entre le réacteur de polymérisation à fonctionnement continu et le refroidisseur post-réacteur.

9. Système de polymérisation à haute pression selon l'une quelconque des revendications 1 à 8, le système de décompression de réacteur (1) comprenant en outre
b4) un système de mise sous azote et/ou
b5) un système de régulation de niveau de remplissage.

10. Système de polymérisation à haute pression selon l'une quelconque des revendications 1 à 9, le système de décompression de réacteur (1) comprenant en outre
b6) une cuve de vidange de décompression de réacteur agencée et conçue pour être en communication fluidique avec la cuve de décompression de réacteur (2) et
b7) au moins une vanne de purge dans la communication fluidique entre la cuve de décompression de réacteur (2) et la cuve de vidange de décompression de réacteur conçue et agencée pour ouvrir ou fermer la communication fluidique entre la cuve de décompression de réacteur (2) et la cuve de vidange de décompression de réacteur,
la cuve de décompression de réacteur (2) étant installée au-dessus de la cuve de vidange de décompression de réacteur.

11. Procédé de polymérisation d'éthylène et éventuellement d'un ou de plusieurs comonomères, permettant d'obtenir un polymère à base d'éthylène, dans un système de polymérisation à haute pression selon l'une quelconque des revendications 1 à 10, comprenant
A) la surveillance du système de polymérisation à haute pression (1) en ce qui concerne une apparition d'une perturbation et
B) l'ouverture d'au moins une première vanne d'urgence en cas de perturbation afin de permettre au contenu du système de polymérisation comprenant un polymère et des constituants gazeux de se dilater dans la cuve de décompression de réacteur (2) par l'intermédiaire de ladite une ou desdites plusieurs lignes de dégagement,
C) la mise en contact dudit contenu dans la cuve de décompression de réacteur (2) avec le milieu de refroidissement brusque aqueux (6) afin d'obtenir une suspension aqueuse de polymère et
D) la séparation de la suspension aqueuse de polymère et des constituants gazeux.

12. Procédé selon la revendication 11, où, en cas d'apparition d'une perturbation ou d'un décalage temporel par rapport à l'apparition d'une perturbation, en particulier avec un retard situé dans la plage de 2 à 30 secondes, plus particulièrement dans la plage de 4 à 16 secondes, de la vapeur, de préférence de la vapeur à moyenne pression, est injectée dans la cuve de décompression de réacteur, en particulier par l'intermédiaire de la colonne de ventilation.

13. Procédé selon la revendication 12, l'injection de vapeur étant suspendue après environ 120 à 300 secondes, de préférence après environ 140 à 220 secondes, en cas d'apparition d'une perturbation.

14. Procédé selon l'une quelconque des revendications 11 à 13, les lignes de dégagement qui relient le réacteur de polymérisation à la cuve de décompression de réacteur (2) étant chauffées à une température de 160 °C à 240 °C.
